# FASCICULE DE BREVET EUROPEEN

(11) **EP 3 720 626 B1**
(45) Date de publication et mention de la délivrance du brevet: **09.06.2021**
(21) Numéro de dépôt: 18808030.3
(22) Date de dépôt: 03.12.2018
(51) Int. Cl.: B21D 26/14, B23K 20/06, B21D 26/10

(54) **PROCÉDÉS DE FORMAGE/SOUDAGE DE PIÈCES PAR IMPULSION MAGNÉTIQUE**
VERFAHREN ZUM FORMEN/SCHWEISSEN VON TEILEN MITTELS MAGNETIMPULS
METHODS FOR SHAPING/WELDING PARTS BY MEANS OF MAGNETIC PULSE

(30) Priorité: 08.12.2017 FR 1761821
(43) Date de publication de la demande: 14.10.2020
(73) Titulaire: ADM28 S.àr.l., 2453 Luxembourg (LU)
(72) Inventeur: SHRIBMAN, Victor, 5528601 Kiryat Ono (IL)
(74) Mandataire: Ipside
(86) Numéro de dépôt international: PCT/EP2018/083268
(87) Numéro de publication internationale: WO 2019/110466

(56) Documents cités:
- WO-A1-2016/023021
- US-A1- 2016 001 392
- S. WOODWARD: "Springback Calibration of Sheet Metal Components Using Impulse Forming Methods", THESIS, 1 janvier 2011 (2011-01-01), XP055166781,

## Description

### Domaine de l'invention

La présente invention s'inscrit dans le domaine du formage/soudage, et plus particulièrement le domaine du formage/soudage de pièces par impulsion magnétique. La présente invention est notamment adaptée au formage/soudage de pièces à fortes épaisseurs.

### Etat de la technique

Les procédés connus de formage/soudage par impulsion magnétique appartiennent au domaine des procédés de formage/soudage par impact. Ces procédés permettent de façonner/souder des pièces métalliques, au moyen de déformations appliquées sur une pièce métallique par des forces électromagnétiques générées par une bobine.

Classiquement, un dispositif pour mettre en œuvre de tels procédés de formage/soudage par impulsion magnétique comporte un ou plusieurs condensateurs relié(s) à une bobine pour créer un champ magnétique bref et intense. Le ou les condensateurs serve(nt) au stockage d'une grande quantité d'énergie électrique. Le champ magnétique intense créé est le résultat d'une décharge très rapide de cette énergie électrique dans la bobine sous la forme d'un courant variable de très forte intensité, en un temps très court. A titre d'exemple, certains dispositifs peuvent atteindre quelques centaines de milliers d'ampères en quelques microsecondes.

Le courant génère un champ magnétique variable entre la bobine et la pièce, préalablement placée à proximité, et induit des courants de Foucault dans cette pièce. Ces courants de Foucault associés au champ magnétique environnant développent dans la pièce des forces qui engendrent une forte accélération de la pièce en direction soit d'une matrice soit d'une autre pièce.

Selon notamment le niveau d'intensité du courant généré, de la fréquence et de la géométrie, la pièce est soit formée soit soudée à une autre pièce.

Le document US-A-2016/001392 divulgue un procédé de formage d'une pièce en matériau métallique par impulsion magnétique, comportant les étapes de positionnement de la pièce entre une bobine et une matrice, et d'autre part, en association avec un champ magnétique crée par ladite bobine, accélération de la pièce en direction de la matrice venant plaquer ladite pièce contre ladite matrice, provoquant le formage de la pièce. Ce document divulgue de façon similaire un procédé de soudage de deux pièces mettant en oeuvre les mêmes étapes.

Les procédés de formage/soudage par impulsion magnétique présentent cependant l'inconvénient de nécessiter de très fortes intensités pour former une pièce ou la souder à une autre pièce, ce qui implique l'utilisation d'une quantité d'énergie électrique considérable.

Le recours à de fortes intensités engendre également, dans la bobine, des températures et des contraintes importantes, pouvant la fragiliser, raccourcissant sa durée de vie, voire conduire à des dommages irrémédiables sur la bobines, tels que des fissures ou la fonte de celle-ci.

### Exposé de l'invention

La présente invention vise à remédier aux inconvénients précités. La présente invention a notamment pour but d'apporter une solution efficace permettant de minimiser l'énergie électrique nécessaire pour former/souder une pièce par impulsion magnétique, tout en garantissant le résultat similaire et sans augmenter le coût de mise en œuvre.

A cet effet, il est proposé par la présente invention un procédé de formage d'une pièce en matériau métallique par impulsion magnétique.

La pièce peut être une pièce tubulaire ou encore une pièce plate, sans que ce soit limitatif de l'invention.

Le procédé de formage comporte les étapes de :
- positionnement d'une couche fine en matériau électriquement conducteur, dite couche conductrice, sur tout ou partie de la pièce à former,
- positionnement de la pièce entre une bobine et une matrice, la couche conductrice étant disposée entre la bobine et la pièce.

L'ordre de mise en œuvre de ces étapes n'est pas imposé et peut être modifié ou réalisé simultanément.

Par couche fine, on entend une couche présentant une épaisseur comprise entre 0.010 mm et 0.150 mm. La pièce présente quant à elle une épaisseur minimum de 1 mm.

La couche conductrice présente une forme similaire à celle de la pièce, de dimension supérieure pour être superposée sur la pièce.

La matrice présente une forme externe correspondant à la forme finale de la pièce souhaitée, après formage.

A l'issue de ces étapes, la pièce est placée entre la bobine et la matrice, et la couche conductrice est placée sur la pièce, du coté de la bobine.

Le procédé de formage par impulsion magnétique comporte par la suite la création par la bobine d'un courant induit, ledit courant induit étant configuré :
- d'une part, pour vaporiser la couche conductrice créant une onde de pression en direction de la pièce, et
- d'autre part, en association avec un champ magnétique crée par ladite bobine d'induction, pour accélérer la pièce en direction de la matrice, via les forces de Lorentz, venant plaquer ladite pièce contre la matrice,
   provoquant le formage de la pièce.

Le procédé de formage combine deux actions concomitantes. L'onde de pression va pousser la pièce en direction de la matrice. De manière simultanée, les forces de Lorentz vont exercer une pression sur la pièce, l'accélérant en direction de la matrice. La pièce vient s'appliquer étroitement contre la matrice par mise en vitesse et déformation de la pièce vers la matrice, et vient prendre la forme de la matrice.

Un tel procédé de formage par impulsion magnétique selon l'invention présente ainsi l'avantage de requérir moins d'énergie que pour un procédé de formage par impulsion magnétique classique.

Un tel procédé de formage selon l'invention permet donc de former, avec une même énergie de départ, des pièces de plus grandes épaisseurs que pour un procédé de formage par impulsion magnétique classique.

Un autre avantage réside dans le fait que l'énergie requise étant moins élevée, l'intensité du courant circulant dans la bobine est moins élevée également. Les contraintes, en termes de températures et de déformation plastiques, subies par la bobine, et générées par le passage du courant de très forte intensité dans la bobine, sont grandement réduites. La durée de vie de la bobine en est augmentée significativement.

Selon des modes de mise en œuvre particuliers, le procédé selon l'invention répond en outre aux caractéristiques suivantes, mises en œuvre séparément ou en chacune de leurs combinaisons techniquement opérantes.

Dans des modes de mise en œuvre particuliers de l'invention, lorsque la pièce et la couche conductrice sont réalisées dans un même matériau, le procédé de formage comporte une étape d'interposition, entre la pièce et la couche conductrice, d'une couche en matériau électriquement isolant, dite couche isolante.

Cette couche isolante permet avantageusement d'éviter la propagation du courant qui circule dans la couche conductrice et la pièce tubulaire.

La couche conductrice présente une forme similaire à celle de la pièce, de dimension supérieure pour être superposée sur la pièce.

La couche isolante présente une épaisseur comprise entre 0.1 mm et 0.5 mm, par exemple de l'ordre de 0.3 mm.

Dans un exemple de réalisation, la couche isolante est réalisée dans un matériau en polymères polyimide (comme le Kapton©), polymères époxyde (« epoxy ») ou tout autre matériau isolant approprié, connu de l'homme du métier.

L'invention est également relative à un procédé de soudage de deux pièces, une pièce interne et une pièce externe, en matériau métallique par impulsion magnétique.

Le procédé de soudage se différentie du procédé de formage notamment au niveau d'intensité de courant généré et de la fréquence utilisée.

La pièce peut être une pièce tubulaire ou encore une pièce plate, sans que ce soit limitatif de l'invention.

Le procédé de soudage comporte les étapes de :
- positionnement des deux pièces entre elles,
- positionnement d'une couche fine en matériau électriquement conducteur, dite couche conductrice, sur tout ou partie de la pièce externe,
- positionnement des pièces en vis-à-vis d'une bobine, la couche conductrice étant disposée entre ladite bobine et la pièce externe.

L'ordre de mise en œuvre de ces étapes n'est pas imposé et peut être modifié ou réalisé simultanément.

La pièce interne est insérée dans la pièce externe en formant une zone de recouvrement, zone où est souhaité le soudage. La couche conductrice présente une forme similaire à celle des pièces, de dimension supérieure à la pièce externe, pour pouvoir y être superposée.

A l'issue de ces différentes étapes, les pièces sont placées dans la bobine, au niveau de la zone de superposition, et la couche conductrice est placée sur la pièce externe, en vis-à-vis de la bobine.

Le procédé de soudage par impulsion magnétique comporte ensuite la création par la bobine d'un courant induit, ledit courant induit étant configuré :
- d'une part, pour vaporiser la couche conductrice créant une onde de pression en direction de la pièce externe, et
- d'autre part, en association avec un champ magnétique crée par ladite bobine, pour accélérer la pièce externe en direction de la pièce interne venant plaquer ladite pièce externe contre ladite pièce interne,
   provoquant le soudage des deux pièces entre elles.

Tout comme le procédé de formage par impulsion magnétique, le procédé de soudage par impulsion magnétique combine deux actions concomitantes. L'onde de pression va pousser la pièce externe en direction de la pièce interne. De manière simultanée, les forces de Lorentz vont exercer une pression sur la pièce externe, l'accélérant en direction de la pièce interne. La pièce externe vient s'appliquer étroitement contre la pièce interne par mise en vitesse et déformation de la pièce externe vers la pièce interne, et vient, sous certaines configurations d'angle d'impact, se souder de manière irréversible à la pièce interne.

Les avantages pour le procédé de soudage par impulsion magnétique sont identiques à ceux précédemment décrits pour le procédé de formage par impulsion magnétique : énergie moins importante, bobine moins sollicitée, soudage de pièces de plus grandes épaisseurs qu'avec un procédé de soudage impulsion magnétique classique

Selon des modes de mise en œuvre particuliers, le procédé selon l'invention répond en outre aux caractéristiques suivantes, mises en œuvre séparément ou en chacune de leurs combinaisons techniquement opérantes.

Dans des modes de mise en œuvre particuliers de l'invention, lorsque la pièce et la couche conductrice sont réalisées dans un même matériau, le procédé de soudage comporte une étape d'interposition, entre la pièce et la couche conductrice, d'une couche en matériau électriquement isolant, dite couche isolante.

Cette couche isolante permet avantageusement d'éviter la propagation du courant qui circule dans la couche conductrice et la pièce externe.

La couche conductrice présente une forme similaire à celle de la pièce, de dimension supérieure pour être superposée à la pièce externe.

La couche isolante présente par exemple une épaisseur comprise entre 0.1 mm et 0.5 mm, par exemple de l'ordre de 0.3 mm.

Dans un exemple de réalisation, la couche isolante est réalisée dans un matériau en polymères polyimide (comme le Kapton©), polymères époxyde (« epoxy ») ou tout autre matériau isolant approprié, connu de l'homme du métier.

### Présentation des figures

L'invention sera mieux comprise à la lecture de la description ci-après faite en référence aux dessins annexés :
La figure 1 représente schématiquement une vue en perspective d'un dispositif adapté au procédé de formage ou de soudage d'une pièce tubulaire selon l'invention,
La figure 2 représente une section transversale d'une bobine annulaire du dispositif de la figure 1, dans laquelle sont positionnées la pièce à former, la matrice et la couche conductrice, pour le procédé de formage,
La figure 3 représente une vue éclatée du positionnement des divers éléments pour un procédé de formage d'une pièce plate selon un exemple de mis en œuvre,
La figure 4 représente une section transversale d'une bobine annulaire du dispositif de la figure 1, dans laquelle sont positionnées les deux pièces et la couche conductrice, pour le procédé de soudage.

### Description détaillée d'un mode de réalisation de l'invention

Dans une première variante de l'invention, l'invention est décrite de manière détaillée dans le cadre d'un procédé de formage d'une pièce par impulsion magnétique.

Dans un exemple nullement limitatif de mise en œuvre, le procédé de formage est décrit dans son application au formage d'une pièce tubulaire.

Par pièce tubulaire, on entend que la pièce a la forme d'un tube sur toute ou partie de sa longueur, au moins au niveau d'une zone destinée à être formée.

La pièce tubulaire 2, avant formage, est préférentiellement de section transversale circulaire.

Bien que ladite pièce tubulaire 2 soit décrite, et illustrée, de manière détaillée dans le cas d'une section transversale circulaire, d'autres formes de sections transversales, telles que carré, rectangulaire, triangulaire, ovale, peuvent s'appliquer.

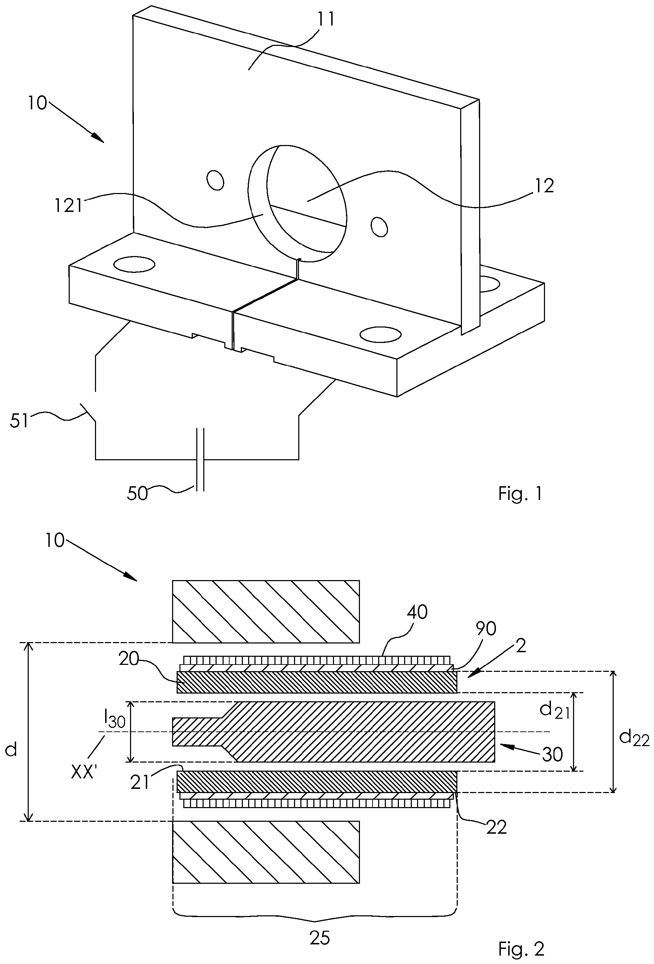

La pièce tubulaire 2 comporte une paroi annulaire 20 présentant une surface intérieure 21 et une surface extérieure 22, comme illustré sur la figure 2.

La pièce tubulaire 2 présente un diamètre interne d₂₁ et un diamètre externe d₂₂.

La paroi annulaire 20 de la pièce tubulaire 2 peut présenter une faible épaisseur ou une forte épaisseur.

Par faible épaisseur, on entend une épaisseur comprise entre 1 et 3 mm.

Par forte épaisseur, on entend une épaisseur supérieure à 3 mm.

La pièce tubulaire est réalisée de préférence dans un matériau métallique.

A titre d'exemple non limitatif de l'invention, le matériau de la pièce peut être de l'acier ou de l'aluminium.

Pour obtenir une pièce formée à partir du procédé de formage objet de l'invention, les éléments constitutifs d'un exemple de dispositif apte à réaliser le procédé de formage est préalablement décrit.

Le dispositif comporte une bobine 10, une unité de stockage 50 et un ou plusieurs commutateurs 51, comme illustré sur la figure 1. Pour le formage, le dispositif comporte en outre une matrice 30, représentée en figure 2.

L'unité de stockage 50 est reliée à la bobine 10 et au(x) commutateur(s) 51. L'unité de stockage 50 est configurée pour emmagasiner une forte énergie, par exemple de l'ordre de quelques dizaines de kilojoules (kJ).

Dans un exemple préféré de réalisation, l'unité de stockage 50 est une batterie de condensateurs de décharge.

La matrice 30 présente une forme externe correspondant à la forme que la pièce à former doit prendre après déformation par impulsion magnétique.

La matrice 30 est préférentiellement réalisée dans un matériau métallique apte à présenter une résistance structurale et à contenir les fortes pressions générées au moment de l'impulsion magnétique. Dans un exemple de réalisation, la matrice 30 est en acier.

La matrice 30 présente une section transversale maximale l₃₀ supérieure au diamètre interne d₂₁ de la pièce tubulaire 2, de sorte que la pièce tubulaire 2 puisse être disposée autour de la matrice 30, avec un jeu.

La bobine 10, de préférence une bobine annulaire, comporte, comme illustré sur la figure 1, un corps 11 dans lequel est pratiquée une ouverture tubulaire 12 délimitée par une surface dite périphérique 121. Ladite ouverture tubulaire est configurée pour recevoir la matrice 30 et la pièce tubulaire 2, disposée autour de la matrice, en vue du formage de ladite pièce tubulaire. En d'autres termes, l'ouverture tubulaire 12 présente une section transversale circulaire, dont le diamètre d est supérieur au diamètre externe d₂₂ de la pièce tubulaire 2.

Le corps 11 est réalisé dans un matériau présentant des caractéristiques spécifiques en termes, d'une part, de résistance mécanique à la déformation plastique pour y faire circuler un courant de très forte intensité, de l'ordre de quelques centaines de milliers d'Ampères et d'autre part de résistance à des températures élevées (c'est-à-dire une température de fusion élevée) pour ne pas fondre pendant le procédé de formage.

Dans un exemple de réalisation, le matériau du corps est en acier.

La bobine est configurée pour qu'un courant de forte intensité puisse y circuler et produire un champ magnétique.

La bobine 10 est également configurée pour que la densité du courant dans une zone de la bobine, soit suffisante pour satisfaire les conditions de formage. Cette zone est appelée partie active.

Dans le cas d'une bobine annulaire telle que décrite dans ce mode de réalisation, le courant est concentré, dans la partie active, sur une couche délimitée par la surface périphérique 121 en vis à vis de la surface extérieure 22 de la pièce tubulaire 2 et d'épaisseur correspondant à l'épaisseur de peau. Le courant génère ainsi, dans l'ouverture tubulaire 12, un champ magnétique concentré Dans l'exemple non limitatif d'une bobine 10 réalisée en acier, l'épaisseur de peau est de l'ordre de quelques millimètres pour une fréquence de quelques dizaines de kHz.

Le procédé de formage objet de l'invention est à présent décrit.

Le procédé de formage comprend une première étape de positionnement de la pièce tubulaire 2 par rapport à la matrice 30.

La pièce tubulaire 2 et la matrice 30 sont positionnées l'une dans l'autre. En d'autres termes, la pièce tubulaire 2 est disposée autour de la matrice 30, de manière coaxiale, en formant, au niveau de leur chevauchement, une zone dite de superposition 25, zone où est souhaité le formage.

Dans l'exemple de la figure 2, la pièce 2 est engagée dans la matrice 30 de sorte que la zone de superposition couvre un tronçon d'extrémité de la matrice 30.

Dans une deuxième étape, une couche fine en matériau électriquement conducteur, dite couche conductrice 40, est positionnée par rapport à la pièce tubulaire 2.

Par couche fine, on entend une couche présentant une épaisseur comprise entre 0.010 mm et 0.150 mm.

La couche conductrice 40 présente, de préférence, une forme tubulaire creuse.

La couche conductrice 40 est placée sur tout ou partie de la pièce tubulaire 2, au niveau d'au moins une partie de la zone de superposition 25.

La couche conductrice 40 est placée sur la surface extérieure 22 de la pièce tubulaire 2.

Dans un exemple de réalisation, la couche conductrice 40 est un tube en aluminium.

Dans une troisième étape, l'ensemble pièce tubulaire/couche conductrice/matrice est positionné en vis-à-vis de la bobine.

L'ensemble pièce tubulaire/couche conductrice/matrice est inséré dans l'ouverture tubulaire 12 de la bobine 10.

L'ensemble pièce tubulaire/couche conductrice/matrice est avantageusement disposé dans l'ouverture tubulaire 12 de telle sorte que tout ou partie de la zone de superposition 25 est en vis-à-vis de la surface périphérique 121 de la bobine.

La pièce tubulaire 2, la couche conductrice 40 et la matrice 30 sont maintenues, dans l'ouverture tubulaire 12, de manière coaxiale entre elles, selon une direction axiale XX' et avec l'ouverture tubulaire 12 de la bobine 10, allongée selon ladite direction axiale XX', par des éléments de fixation (non représentés sur les figures).

Dans un exemple de réalisation, les éléments de fixation sont des entretoises de centrage et des éléments de maintien en position.

L'ordre de mise en œuvre des trois précédentes étapes n'est pas imposé et, suivant le procédé, peuvent être réalisées dans un autre ordre que celui décrit ou réalisées simultanément sans modifier le résultat desdites étapes.

A l'issue de ces trois étapes, la pièce tubulaire 2 et la couche conductrice 40 sont positionnées, d'une part entre elles, et d'autre part entre la matrice 30 et la bobine 10.

Dans un mode particulier de réalisation du procédé de formage, ledit procédé de formage peut comporter une étape supplémentaire d'interposition d'une couche en matériau électriquement isolant, dite couche isolante 90, entre la pièce tubulaire 2 et la couche conductrice 40.

Cette étape supplémentaire est nécessaire lorsque la pièce tubulaire 2 et la couche conductrice 40 sont réalisées dans un même matériau.

Cette couche isolante est destinée à éviter la propagation du courant qui circule dans la couche conductrice et la pièce tubulaire

La couche isolante 90 présente une épaisseur comprise entre 0.1 mm et 0.5 mm, par exemple de l'ordre de 0.3 mm.

La couche isolante est interposée entre la pièce tubulaire et la couche conductrice.

La couche isolante 90 se présente, de préférence, sous la forme d'un tube creux.

La couche isolante 90 est placée sur tout ou partie de la pièce tubulaire 2, au niveau d'au moins une partie de la zone de superposition 25.

La couche isolante 90 est placée sur la surface extérieure 22 de la pièce tubulaire 2.

Le procédé de formage comporte ensuite une quatrième étape, dite étape de formage de la pièce tubulaire 2 par impulsion magnétique.

L'unité de stockage 50 emmagasine une forte énergie. Lors de la fermeture du(des) commutateur(s) 51, la bobine 10 est reliée à l'unité de stockage. L'énergie est alors déchargée très rapidement, de l'ordre de quelques microsecondes sur la bobine et un courant de forte intensité circule dans ladite bobine 10.

Ce courant est concentré, dans la partie active, sur une couche délimitée par la surface périphérique 121.

Le courant génère un champ magnétique variable entre la bobine 10 et la pièce tubulaire 2 et induit des courants de Foucault, dénommés couramment courant induit.

Ce courant induit se concentre sur une épaisseur réduite dite épaisseur de peau dans l'ouverture tubulaire.

L'épaisseur de peau est généralement comprise entre 0.1 et 1mm, principalement fonction de la fréquence et de la conductivité électrique du matériau de la pièce.

La fréquence mise en œuvre dans le formage par impulsion magnétique est de 25 kHz, ce qui correspond par exemple, à une épaisseur de peau de 1.4 millimètres pour une bobine réalisée dans un matériau en acier.

La couche conductrice 40 étant la plus proche de la surface périphérique de la bobine, le courant induit est d'abord transmis dans la couche conductrice 40.

La couche conductrice 40 étant de faible épaisseur devant cette épaisseur de peau, une partie du courant induit est également transmise dans la pièce tubulaire 2.

Le courant induit dans la couche conductrice va provoquer l'échauffement de ladite couche conductrice. Lorsque l'énergie de chauffe est supérieure à l'énergie de sublimation de la couche conductrice 40, ladite couche conductrice se vaporise, créant une onde de pression, notamment en direction de la pièce tubulaire 2, poussant ladite pièce tubulaire contre la matrice 30.

En parallèle, le courant induit dans la pièce tubulaire 2, associé au champ magnétique environnant développent dans la pièce des forces volumiques importantes appelées forces de Lorentz. Ces forces de Lorentz exercent une pression sur la pièce tubulaire 2, l'accélérant en direction de la matrice.

L'impact de la pièce tubulaire contre la matrice, provenant d'une part de la poussée de la pièce tubulaire 2 par l'onde de pression et d'autre de part de l'accélération de la pièce tubulaire par les forces de Lorentz, provoque le formage immédiat et irréversible de ladite pièce tubulaire.

Le procédé de formage selon l'invention recourt, de manière avantageuse, à, l'utilisation d'une source d'énergie unique, à savoir un banc de condensateurs déchargé dans une bobine, pour vaporiser la couche conductrice et simultanément appliquer une pression magnétique sur la pièce tubulaire.

Le procédé de formage selon l'invention a été décrit de manière détaillée dans son application au formage d'une pièce tubulaire.

Ce procédé peut également s'appliquer au formage d'une pièce plate 2b. Par pièce plate, on entend que la pièce a au moins une surface de forme plane, ou sensiblement plane, sur tout ou partie de sa longueur, au moins au niveau d'une zone destinée à être formée.

Dans un tel cas, la bobine est une bobine plate, mono ou multi-spires, par exemple sous la forme d'un E couché. La couche conductrice est un feuillet.

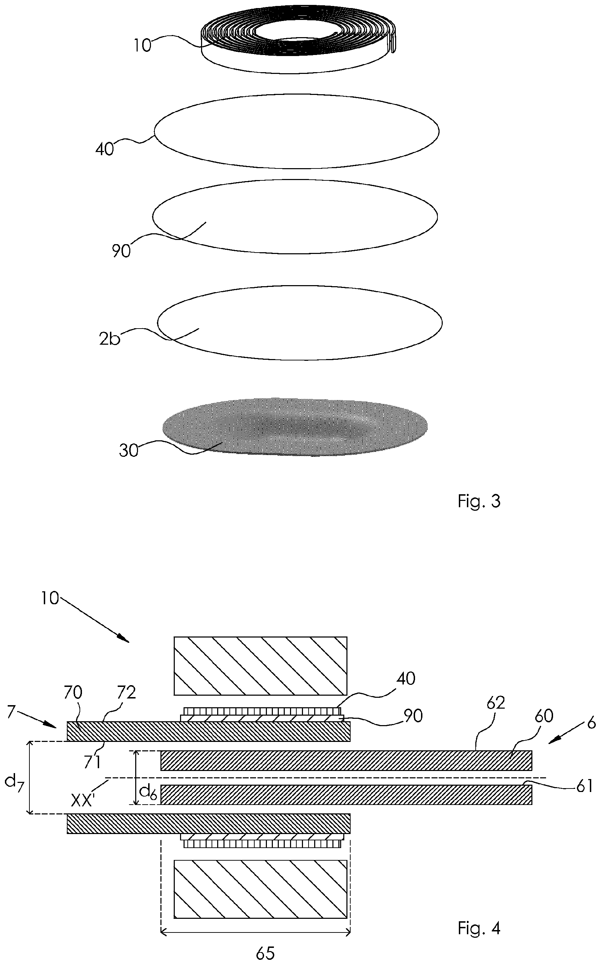

La figure 3 illustre un exemple de positionnement de la pièce plate 2b, de la couche conductrice 40, de la couche isolante 90 (si existe), par rapport à la bobine 10 et à la matrice 30.

La pièce plate 2b est positionnée sur la matrice 30. La couche isolante 90, lorsqu'elle est obligatoire, est positionnée sur tout ou partie de la pièce plate. La couche conductrice 40, est positionnée sur tout ou partie de la pièce plate, ou de la couche isolante lorsque celle-ci est obligatoire.

L'ensemble matrice, pièce plate/couche conductrice, éventuellement couche isolante, est positionné vis-à-vis de la bobine. L'étape de formage est identique à celle décrite précédemment.

Dans une deuxième variante de l'invention, l'invention est décrite dans le cadre d'un procédé de soudage de deux pièces par impulsion magnétique.

Dans un exemple nullement limitatif de mise en œuvre, le procédé de soudage est décrit dans son application au soudage de deux pièces tubulaires.

Le dispositif décrit pour le procédé de formage, hormis la matrice, peut être avantageusement utilisé pour le procédé de soudage.

Le procédé de soudage comprend une première étape de positionnement des deux pièces tubulaires entre elles.

Une première pièce tubulaire, dite pièce interne 6, comporte une paroi annulaire 60 présentant une surface intérieure 61 et une surface extérieure 62, comme illustré sur la figure 4.

Une seconde pièce tubulaire, dite pièce externe 7, comporte une paroi annulaire 70 présentant une surface intérieure 71 et une surface extérieure 72, comme illustré sur la figure 4.

La pièce externe 7 présente un diamètre interne d₇ supérieur à un diamètre externe d₆ de la pièce interne.

La pièce interne 6 et la pièce externe 7 sont positionnées l'une dans l'autre. En d'autres termes, la pièce interne 6 est engagée dans la pièce externe 7, de manière coaxiale, en formant, au niveau de leur superposition, une zone dite de recouvrement 65.

Dans une deuxième étape, la couche conductrice 40 est positionnée par rapport aux deux pièces 6, 7.

La couche conductrice 40 est placée sur tout ou partie de la pièce externe 7, au niveau d'au moins une partie de la zone de recouvrement 65.

La couche conductrice 40 est placée sur la surface extérieure 72 de la pièce externe 7.

Dans une troisième étape, l'ensemble pièce interne/pièce externe/couche conductrice est positionné en vis-à-vis de la bobine.

L'ensemble pièce interne/pièce externe/couche conductrice est inséré dans l'ouverture tubulaire 12 de la bobine 10.

L'ensemble pièce interne/pièce externe/couche conductrice est avantageusement disposé dans l'ouverture tubulaire 12 de telle sorte que tout ou partie de la zone de recouvrement 65 est en vis-à-vis de la surface périphérique 121 de la bobine 10.

La pièce interne 6, la pièce externe 7 et la couche conductrice 40 sont maintenues, dans l'ouverture tubulaire 12, de manière coaxiale entre elles, selon la direction axiale XX' et avec l'ouverture tubulaire 12 de la bobine 10, allongée selon ladite direction axiale XX', par les éléments de fixation (non représentés sur les figures).

L'ordre de mise en œuvre des trois précédentes étapes n'est pas imposé et, suivant le procédé, peuvent être réalisées dans un autre ordre que celui décrit ou réalisées simultanément sans modifier le résultat desdites étapes.

A l'issue de ces trois étapes, la pièce interne 6, la pièce externe 7 et la couche conductrice 40 sont positionnées entre elles et dans la bobine 10, comme illustré sur la figure 4.

Dans un mode particulier de réalisation du procédé de soudage, ledit procédé de soudage peut comporter une étape supplémentaire d'interposition de la couche isolante 90, entre la pièce externe 7 et la couche conductrice 40.

Comme pour le procédé de formage, cette étape supplémentaire est nécessaire lorsque la pièce tubulaire 2 et la couche conductrice 40 sont réalisées dans un même matériau.

La couche isolante 90 présente une épaisseur comprise entre 0.1 mm et 0.5 mm, par exemple de l'ordre de 0.3 mm.

La couche isolante est interposée entre la pièce externe 7 et la couche conductrice.

La couche isolante 90 se présente, de préférence, sous la forme d'un feuillet.

La couche isolante 90 est placée sur tout ou partie de la pièce externe 7, au niveau d'au moins une partie de la zone de superposition 25.

La couche isolante 90 est placée sur la surface extérieure 72 de la pièce externe 7.

Le procédé de soudage comporte ensuite une quatrième étape, dite étape de soudage de la pièce interne 6 et la pièce externe 7 entre elles par impulsion magnétique.

L'unité de stockage 50 emmagasine une forte énergie. Lors de la fermeture du(des) commutateur(s) 51, la bobine 10 est reliée à l'unité de stockage. L'énergie est alors déchargée très rapidement, de l'ordre de quelques microsecondes sur la bobine et un courant de forte intensité circule dans ladite bobine 10.

Ce courant est concentré, dans la partie active, sur une couche délimitée par la surface périphérique 121.

Le courant génère un champ magnétique variable entre la bobine 10 et la pièce externe 7 et induit des courants de Foucault, dénommés couramment courant induit.

Comme pour le procédé de formage, ce courant induit se concentre sur une épaisseur réduite dite épaisseur de peau dans l'ouverture tubulaire.

L'épaisseur de peau est généralement comprise entre 0.1 et 1mm, principalement fonction de la fréquence et de la conductivité électrique du matériau de la pièce.

La fréquence mise en œuvre dans le formage par impulsion magnétique est de quelques dizaines de kHz, ce qui correspond par exemple, à une épaisseur de peau de quelques millimètres pour une bobine réalisée dans un matériau en acier.

Pour rappel, le niveau d'intensité du courant et la fréquence mise en œuvre diffère selon qu'il est souhaité un formage ou un soudage.

La couche conductrice 40 étant la plus proche de la surface périphérique 121 de la bobine 10, le courant induit est d'abord transmis dans la couche conductrice 40.

La couche conductrice 40 étant de faible épaisseur devant cette épaisseur de peau, une partie du courant induit est également transmise dans la pièce externe 7.

Le courant induit dans la couche conductrice va provoquer l'échauffement de ladite couche conductrice. Lorsque l'énergie de chauffe est supérieure à l'énergie de sublimation de la couche conductrice 40, ladite couche conductrice se vaporise, créant une onde de pression, notamment en direction de la pièce externe 7, poussant ladite pièce externe contre la pièce interne 6.

En parallèle, le courant induit dans la pièce externe 7, associé au champ magnétique environnant développent dans la pièce externe 7 des forces volumiques importantes appelées forces de Lorentz. Ces forces de Lorentz exercent une pression sur la pièce externe 7, l'accélérant en direction de la pièce interne 6.

L'impact de la pièce externe contre la pièce interne, provenant d'une part de la poussée de la pièce externe 7 par l'onde de pression et d'autre de part de l'accélération de la pièce externe 7 par les forces de Lorentz, provoque le soudage immédiat des deux pièces entre elles.

Le procédé de soudage, tout comme le procédé de formage, recourt, de manière avantageuse, à l'utilisation d'une source d'énergie unique, à savoir un banc de condensateurs déchargé dans une bobine, pour vaporiser la couche conductrice et simultanément appliquer une pression magnétique sur la pièce externe.

Le procédé de soudage selon l'invention a été décrit de manière détaillée dans son application au soudage d'une pièce tubulaire.

Ce procédé peut également s'appliquer au soudage de deux pièces plates entre elles.

La description ci-avant illustre clairement que par ses différentes caractéristiques et leurs avantages, la présente invention atteint les objectifs qu'elle s'était fixés. En particulier, elle fournit un procédé de formage ou de soudage qui utilise moins d'énergie pour former/soudage une même pièce que pour un procédé de formage/soudage classique. En d'autres termes, un tel procédé de formage/soudage permet de former/souder des pièces d'épaisseur plus importantes avec la même énergie que pour un procédé de formage/soudage par impulsion magnétique classique (c'est-à-dire sans l'ajout d'une couche conductrice).

## Revendications

1. Procédé de formage d'une pièce (2, 2b) en matériau métallique par impulsion magnétique, **caractérisé en ce qu'**il comporte les étapes :
- positionnement d'une couche fine en matériau électriquement conducteur, dite couche conductrice (40), sur tout ou partie de la pièce à former,
- positionnement de la pièce (2, 2b) entre une bobine (10) et une matrice (30), la couche conductrice (40) étant disposée entre ladite bobine et ladite pièce,
- création par la bobine (10) d'un courant induit, ledit courant induit étant configuré :
- d'une part, pour vaporiser la couche conductrice (40) créant une onde de pression en direction de la pièce (2), et
- d'autre part, en association avec un champ magnétique crée par ladite bobine, pour accélérer la pièce (2, 2b) en direction de la matrice (30) venant plaquer ladite pièce contre ladite matrice,
provoquant le formage de la pièce (2, 2b).

2. Procédé de formage selon la revendication 1 comportant une étape d'interposition, entre la pièce (2, 2b) et la couche conductrice (40), d'une couche en matériau électriquement isolant, dite couche isolante (90).

3. Procédé de soudage de deux pièces (6, 7), une pièce interne (6) et une pièce externe (7), en matériau métallique par impulsion magnétique, **caractérisé en ce qu'**il comporte les étapes de :
- positionnement des deux pièces (6, 7) entre elles,
- positionnement d'une couche fine en matériau électriquement conducteur, dite couche conductrice (40), sur tout ou partie de la pièce externe (7),
- positionnement des pièces (6, 7) en vis-à-vis d'une bobine (10), la couche conductrice (40) étant disposée entre ladite bobine et la pièce externe (7),
- création par la bobine d'un courant induit, ledit courant induit étant configuré :
- d'une part, pour vaporiser la couche conductrice (40) créant une onde de pression en direction de la pièce externe (7), et
- d'autre part, en association avec un champ magnétique crée par ladite bobine (10), pour accélérer la pièce externe (7) en direction de la pièce interne (6) venant plaquer ladite pièce externe contre ladite pièce interne,
provoquant le soudage des deux pièces entre elles.

4. Procédé de soudage selon la revendication 3 comportant une étape d'interposition, entre la pièce externe (7) et la couche conductrice (40), d'une couche en matériau électriquement isolant, dite couche isolante (90).

## Patentansprüche

1. Verfahren zum Formen eines Teils (2, 2b) aus einem Metallwerkstoff mittels Magnetimpuls, **dadurch gekennzeichnet, dass** es die folgenden Schritte beinhaltet:
- Positionieren einer dünnen Schicht aus elektrisch leitfähigem Werkstoff, leitfähige Schicht (40) genannt, auf dem zu formenden Teil oder einem Teil davon,
- Positionieren des Teils (2, 2b) zwischen einer Spule (10) und einer Matrix (30), wobei die leitfähige Schicht (40) zwischen der Spule und dem Teil angeordnet ist,
- Aufbauen durch die Spule (10) eines Induktionsstroms,
wobei der Induktionsstrom konfiguriert ist:
- einerseits zum Sprühen der leitfähigen Schicht (40), wodurch eine Druckwelle in Richtung des Teils (2) aufgebaut wird,
und
- andererseits in Verbindung mit einem Magnetfeld, das durch die Spule aufgebaut wird, um das Teil (2, 2b) in Richtung der Matrix (30) zu beschleunigen, wodurch das Teil an der Matrix angelegt wird,
wodurch die Formung des Teils (2, 2b) hervorgerufen wird.

2. Verfahren zum Formen nach Anspruch 1, einen Schritt des Einsetzens zwischen dem Teil (2, 2b) und der leitfähigen Schicht (40) einer Schicht aus elektrisch isolierendem Werkstoff beinhaltend, die Isolierschicht (90) genannt wird.

3. Verfahren zum Schweißen von zwei Teilen (6, 7), einem inneren Teil (6) und einem äußeren Teil (7), aus einem metallischen Werkstoff, mittels Magnetimpuls, **dadurch gekennzeichnet, dass** es die folgenden Schritte beinhaltet:
- Positionieren der beiden Teile (6, 7) zueinander,
- Positionieren einer dünnen Schicht aus elektrisch leitfähigem Werkstoff, leitfähige Schicht (40) genannt, auf dem äußeren Teil (7) oder einem Teil davon,
- Positionieren der Teile (6, 7) gegenüber einer Spule (10), wobei die leitfähige Schicht (40) zwischen der Spule und dem äußeren Teil (7) angeordnet wird,
- Aufbauen durch die Spule eines Induktionsstroms, wobei der Induktionsstrom konfiguriert ist:
- einerseits zum Sprühen der leitfähigen Schicht (40), wodurch eine Druckwelle in Richtung des äußeren Teils (7) aufgebaut wird, und
- andererseits in Verbindung mit einem Magnetfeld, das durch die Spule (10) aufgebaut wird, um das äußere Teil (7) in Richtung des inneren Teils (6) zu beschleunigen, wodurch das äußere Teil an dem inneren Teil angelegt wird,
wodurch das Verschweißen der beiden Teile miteinander hervorgerufen wird.

4. Verfahren zum Schweißen nach Anspruch 3, einen Schritt des Einsetzens zwischen dem äußeren Teil (7) und der leitfähigen Schicht (40) einer Schicht aus elektrisch isolierendem Werkstoff beinhaltend, die Isolierschicht (90) genannt wird.

## Claims

1. Method for shaping a part (2, 2b) made of a metal material by means of a magnetic pulse, **characterised in that** it includes the steps of:
- positioning a thin layer made of an electrically conducting material, referred to as a conductive layer (40), on all or part of the part to be shaped,
- positioning the part (2, 2b) between a coil (10) and a matrix (30), the conductive layer (40) being arranged between said coil and said part,
- generating, by the coil (10), an induced current, said induced current being configured:
- on the one hand to vaporise the conductive layer (40), generating a pressure wave in the direction of the part (2), and
- on the other hand, in association with a magnetic field generated by said coil, to accelerate the part (2, 2b) in the direction of the matrix (30), pressing said part against said matrix,
resulting in the part (2, 2b) being shaped.

2. Shaping method according to claim 1, including a step of interposing, between the part (2, 2b) and the conductive layer (40), a layer made of an electrically insulating material, referred to as an insulating layer (90) .

3. Method for welding two parts (6, 7), an internal part (6) and an external part (7), made of a metal material by means of a magnetic pulse, **characterised in that** it includes the steps of:
- positioning the two parts (6, 7) relative to one another,
- positioning a thin layer made of an electrically conducting material, referred to as a conductive layer (40), on all or part of the external part (7),
- positioning the parts (6, 7) such that they face a coil (10), the conductive layer (40) being arranged between said coil and the external part (7),
- generating, by the coil, an induced current, said induced current being configured:
- on the one hand to vaporise the conductive layer (40), generating a pressure wave in the direction of the external part (7), and
- on the other hand, in association with a magnetic field generated by said coil (10), to accelerate the external part (7) in the direction of the internal part (6), pressing said external part against said internal part,
causing the two parts to be welded to one another.

4. Welding method according to claim 3, including a step of interposing, between the external part (7) and the conductive layer (40), a layer made of an electrically insulating material, referred to as an insulating layer (90) .
